# EUROPEAN PATENT APPLICATION

(11) **EP 2 023 615 A1**
(43) Date of publication of application: **11.02.2009**
(21) Application number: 08013258.2
(22) Date of filing: 23.07.2008
(51) Int. Cl.: H04N 5/44, H04N 5/63

(54) **PC-integrated TV**

(30) Priority: 23.07.2007 KR 20070073278
(71) Applicant: IT SALUX Co. Ltd., Guro-gu Seoul (KR)
(72) Inventor: Kim, Joon-Young, Incheon-City 403-739 (KR); Gang, Bong-Oh, Incheon-City 407-061 (KR)
(74) Representative: Schoppe, Fritz

(57) **Abstract**

Provided is a PC-integrated TV including a PC unit that includes a PC unit that includes a PC main board having a CPU, a main memory device, and a system chipset provided thereon and an auxiliary memory device having an operating system mounted therein, a TV unit that includes a TV signal processing section configured to process TV signals and a controller configured to process internal and external controls, a Switching Mode Power Supply (SMPS) unit that supplies power to the TV unit and PC unit; a PC-TV interface unit that serves as an interface between the TV unit and the PC unit, and a user interface unit that delivers a user manipulation to the controller of the TV unit. The SMPS unit includes an SMPS power module that receives an AC voltage and outputs a voltage suitable for the TV unit, and an Advanced Technology Extension (ATX) power board that receives the voltage output from the SMPS power module, converts the voltage into a voltage suitable for the PC unit to supply the converted voltage to the PC unit, and can perform control by the ATX power supply standard. Therefore, power can be supplied to the PC unit and the TV unit through one SMPS power module, and the PC unit and the TV unit can be integrally manipulated through one user interface.

## Description

### CROSS-REFERENCE TO RELATED APPLICATION

This application claims priority to and the benefit of Korean Patent Application No. 2007-0073278, filed in July 23, 2007, the disclosure of which is incorporated herein by reference in its entirety.

### BACKGROUND

### 1. Field of the present invention

The present invention relates to a personal computer (PC) and a television (TV) set, and more specifically, to a PC-integrated TV.

### 2. Discussion of Related Art

TVs have become a leading role in home entertainment. Recently, however, PCs have also become an important role in home entertainment, with the development of multimedia technology. The enhancement in computation performance and integrated signal processing ability of PCs caused by the digitalization of multimedia is increasing the importance of PCs. The enhancement in processing ability of PCs is obtained not only by simple improvement of the computation ability of central processing units (CPUs) but also by the integrated signal processing ability for digitalized multimedia data. For example, as moving picture compression/decompression techniques such as Moving Picture Experts Group (MPEG) and audio compression/decompression techniques such as MPEG Audio layer 3 (MP3) emerge and video controllers and audio controllers which can reproduce high-quality images and sounds are integrated into hardware, PCs are becoming an important role in home entertainment.

A simplest example of a PC utilized as a main component of home entertainment is a case in which a PC is connected to a TV such that an external input terminal of the TV receives a video output of the PC. In this case, an output of a video controller mounted in the PC is displayed on the TV screen, which is equivalent to a case in which the TV is used as a monitor of the PC. An audio output of the PC may be connected to a speaker through a separate sound processing amplifier, or may be connected to an active speaker having an amplifier embedded therein.

Another example is a PC-integrated TV. Compared to the above-described case where an image output of the PC is input as an external input of the TV, the PC-integrated TV is an advanced form which enables a user to perform integrated manipulation. Through the PC-integrated TV, a user can watch motion pictures reproduced by the PC, or can perform web-surfing. Further, the complex cable connection between the TV and the PC can be removed, and the PC-integrate TV can provide convenience of use.

Conventional PC-integrated TVs, which have been launched on the market so far, are manufactured by simply integrating TV and PC. The conventional PC-integrated TV is constructed in such a manner that components of the TV and components of the PC are integrated into one housing, and video and audio outputs of the PC are simply received as video and audio inputs of the TV.

In such a conventional PC-integrated TV, a large number of components of the TV are duplicated with those of the PC, and the organic combination among the components is not achieved.

### SUMMARY OF THE PRESENT INVENTION

The present invention provides a PC-integrated TV in which a PC unit and a TV unit are organically combined.

In example embodiments, a PC-integrated TV includes: a PC unit that includes a PC main board having a CPU, a main memory device, and a system chipset provided thereon and an auxiliary memory device having an operating system mounted therein; a TV unit that includes a TV signal processing section configured to process TV signals and a controller configured to process internal and external controls; a Switching Mode Power Supply (SMPS) unit that supplies power to the TV unit and PC unit; a PC-TV interface unit that serves as an interface between the TV unit and the PC unit; and a user interface unit that delivers a user manipulation to the controller of the TV unit. The SMPS unit includes: an SMPS power module that receives an AC voltage and outputs a voltage suitable for the TV unit; and an Advanced Technology Extension (ATX) power board that receives the voltage output from the SMPS power module, converts the voltage into a voltage suitable for the PC unit to supply the converted voltage to the PC unit, and can perform control by the ATX power supply standard.

The SMPS power module may be configured to supply voltages of +24V_{DC}, +12V_{DC,} and +5V_{DC}.

The ATX power board may be configured to supply voltages of +12V_{DC}, - 12V_{DC}, +5V_{DC}, and +3.3V_{DC}.

The user interface unit may include a remote-control signal receiving and processing section having a signal receiving element and a signal processing element; and a remote control. The signal receiving element may be configured to receive infra-red remote-control signals or RF (Radio Frequency) remote-control signals delivered from the remote control.

The remote control may be configured to receive user inputs which instruct the operation of the PC unit and user inputs which instruct the operation of the TV unit. In this case, the user inputs which instruct the operation of the TV unit may include user inputs which instruct channel change, screen mode change, and volume control, and the user inputs which instruct the operation of the PC unit may include a key input for manipulating a user interface screen which can be executed in the PC unit, an application selection for selecting various applications which can be executed in the PC unit, and a user input which instructs control operations allocated in specific applications.

### BRIEF DESCRIPTION OF THE DRAWINGS

The above and other objects, features and advantages of the present invention will become more apparent to those of ordinary skill in the art by describing in detail example embodiments thereof with reference to the attached drawings, in which:
Fig. 1 is a block diagram of a PC-integrated TV according to the present invention;
Fig. 2 is a block diagram of an SMPS unit applied to the PC-integrated TV according to the present invention; and
Fig. 3 is a block diagram of a user interface unit of the PC-integrated TV according to the present invention.

### DETAILED DESCRIPTION OF EXAMPLE EMBODIMENTS

Hereinafter, an example embodiment of the present invention will be described with reference to the accompanying drawings.

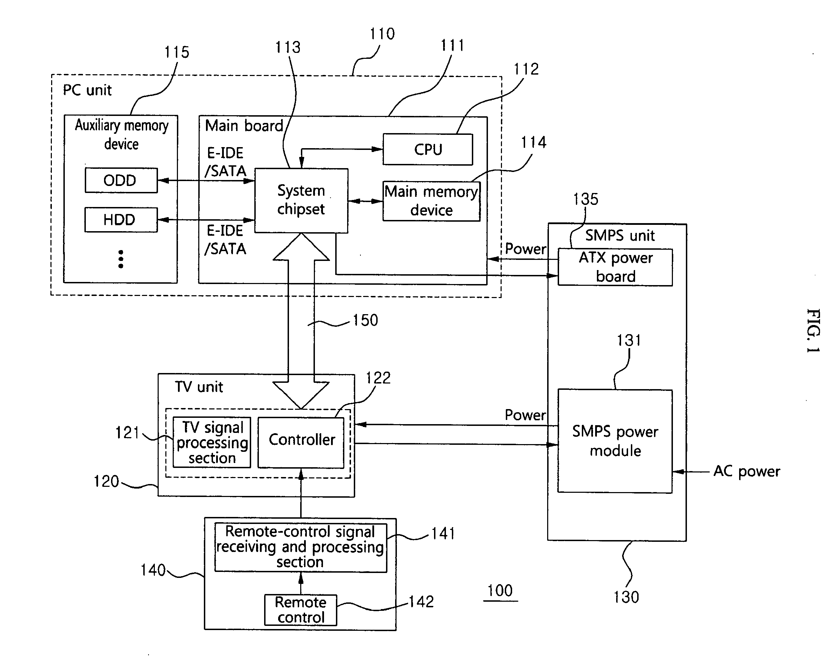

Fig. 1 is a block diagram of a PC-integrated TV according to the present invention.

As shown in Fig. 1, the PC-integrated TV 100 according to the present invention includes a PC unit 110, a TV unit 120, a Switching Mode Power Supply (SMPS) unit 130, a user interface unit 140, and a PC-TV interface unit 150.

The PC unit 110 includes a main board 111, a Central Processing Unit (CPU) 112, a system chipset 113, a main memory device 114, and an auxiliary memory device 115. The CPU 112, the system chipset 113, and the main memory device 114 are mounted on the main board 111. For the main memory device 114, D-RAM is mainly used, and for the auxiliary memory device 115, a Hard Disk Drive (HDD) or a flash memory may be used. Meanwhile, although not shown in Fig. 1, the PC unit 110 may include a video controller 116 which generates and outputs image signals and an audio controller 117 which generates and outputs 2-channel or multi-channel analog or digital audio signals. In general, the video controller 116 and the audio controller 117 are mounted on the main board 111.

For the main board 111, various types of main boards may be adopted. In general, an Advanced Technology Extension (ATX)-type board may be adopted. To satisfy demand for a reduction in thickness, a board having a size that is designed to be suitable for the standard of a housing having a mini-ATX board and a PC-integrated TV 100 mounted therein may be adopted, thereby reducing the external size of a product. Meanwhile, ATX is an industrial open standard for main boards of desktop computers, and the ATX-type board can secure a space in which a larger number of expansion cards can be housed and has a small number of cables and excellent cooling efficiency. Therefore, the ATX-type board is suitable for the characteristic of the PC-integrated TV.

For the CPU 112 mounted on the PC unit 110, Intel x86 CPUs or CPUs having compatibility with Intel x86 CPUs may be adopted when the PC unit is an IBM-based PC. The system chipset 113 which controls the entire PC unit 112 in a hardware manner serves as a main memory device controller, an interface of expansion slots, a disk interface, an interface of keyboard and mouse, and a USB interface. In general, the system chipset 113 is composed of two (North Bridge and South Bridge) or three (MCH: Memory Control Hub, ICH: I/O Control Hub, and FWH: Firmware Hub) chips which perform different functions from each other. The configuration may differ depending on the type of the chipset. Recently, an all-in-one system processor chip in which a north bridge chip and a south bridge chip are integrated and a video controller and an audio controller are integrated has frequently been applied to a system of which the size and weight is reduced. A system processor such as Cx700/Cx700m made by VIA may be taken as an example. Therefore, when the above-described all-in-one system processor is used, the system chip set 113, the video controller, and the audio controller are embedded into one chip. Fig. 1 shows an example where the video controller and the audio controller are integrated with the system chipset 113. Depending on the type of the system chipset 113, a separate video controller and a separate audio controller may be included in the main board 111 of the PC unit.

For the main memory device 114, D-RAM is generally used. Recently, Double Data Rate-DRAM (DDR-DRAM) is mainly applied. For the auxiliary memory device 115, an HDD or a flash memory may be applied. The auxiliary memory device 115 is connected to the system chipset 113 through a parallel interface such as extended-IDE (E-IDE) or a serial interface such as serial AT attachment (SATA). In general, the HDD may be applied as the auxiliary memory device. However, considering impact resistance, power consumption, and noise reduction, it may be advantageous that the flash memory is applied. The auxiliary memory device 115 may include an Optical Disc Drive (ODD) such as DVD-ROM, DVD RW, blue ray, HD-DVD, CD-ROM, CD-RW or the like. The ODD may be connected to the system chipset 113 through an interface such as E-IDE or SATA.

Meanwhile, the TV unit 120 includes a TV signal processing section 121 which processes image signals and audio signals of the TV. The TV signal processing section 121 is a typical component of the TV, which receives image signals in accordance with TV signal formats (for example, analog signals such as NTSC, SECAM, or PAL or digital TV signals) and outputs the image signals to a display panel.

Further, the TV unit 120 may include a controller 122 which controls the interface with the PC unit 110 and processes control signals of the TV unit 120. Recently, a one-chip solution manufactured in the form of a dual-core chip has been provided. In the one-chip solution, the TV signal processing section 121 for processing TV signals and the controller 122 which has firmware mounted therein through predetermined programming to receive remote control signals and to process the generation of On Screen Display (OSD) output on a TV screen are included in one chip.

An example of such a one-chip solution is VCT-Pro chip made by Micronas in Switzerland, in which 8-bit microcomputers (8051 compatible) are embedded as the TV signal processing section 121 for processing TV signals and the controller 122. However, when the TV unit 120 is not implemented with a dual-core chip provided by integrating the TV signal processing section 121 and the controller 122, a microcomputer may be provided as the controller 122 separately from the TV signal processing section 121.

The SMPS unit 130 serves to supply power to the PC unit 110 and the TV unit 120.

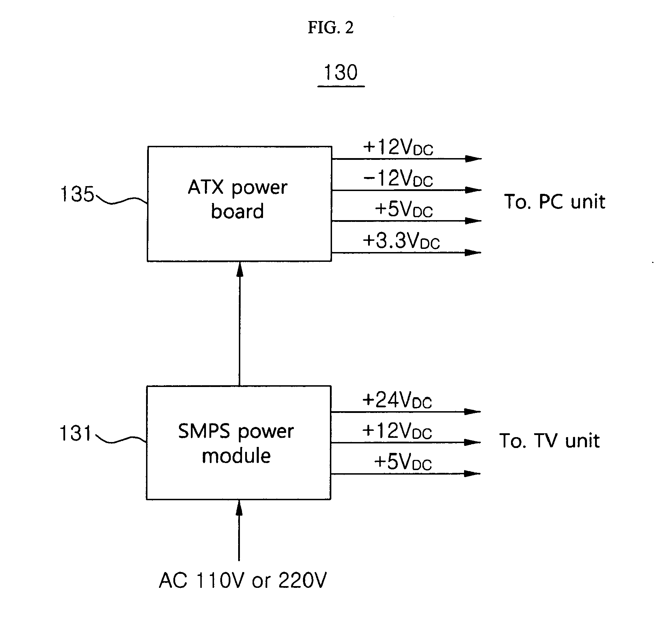

Fig. 2 is a block diagram of the SMPS unit applied to the PC-integrated TV according to the present invention.

Referring to Fig. 2, the SMPS unit 130 applied to the PC-integrated TV according to the present invention includes an SMPS power module 131 and an ATX power board 135.

Since the SMPS has an advantage in size reduction and efficiency, the SMPS is suitable for reducing the weight and size of electronic products and is widely used for a main power supply device. The SMPS unit 130 receives an AC voltage of 110 or 220V to convert the AC voltage into various DC voltages within the range of 3.3 to 48V and supplies the DC voltages (for example, +12V, +5V, and +3.3V). In a standby state, the SMPS unit 130 supplies a low voltage (for example, 5V) to the PC unit 110 and the TV unit 120. Then, the voltage is applied to the controller 122 of the TV unit 120 to be operated.

When an ATX type main board is used as the main board 111 of the PC unit, the ATX power board 135 serves to supply power to the main board 111 of the PC unit. That is, since the PC unit 110 and the TV unit 120 commonly receive power through the SMPS power module 131 in the PC-integrated TV 100 according to the present invention, the ATX power board 135 which converts output of the SMPS power module 131 and supplies to the main board 111 of the PC unit is separately provided, unlike a case where an ATX SMPS dedicated to a general PC is used.

In the PC-integrated TV 100 according to the present invention, one SMPS power module 131 is used. However, the ATX power board 135 which generates power required for the PC unit using power generated from one SMPS power module may be separately provided to construct the SMPS unit 130. Therefore, it is possible to reduce heat, noise, electrical noise occurring when separate SMPS power modules are used in the PC unit and the TV unit, respectively.

Referring to Fig. 2, the TV unit 120 requires voltages of +24V_{DC}, +12V_{DC}, and +5V_{DC}, and the PC unit 110 requires voltages of +12V_{DC}, -12V_{DC,} +5V_{DC,} and +3.3V_{DC}.

Therefore, the SMPS power module 131 which can be applied to the PC-integrated TV according to the present invention generates voltages of +24V_{DC}, +12V_{DC}, and +5V_{DC} to supply the voltages to the TV unit 120 and the ATX power board 135.

The ATX power board 135 receives at least one of the voltages of +24V_{DC}, +12V_{DC}, and +5V_{DC} generated by the SMPS power module 131, and then generates voltages of +12V_{DC}, -12V_{DC}, +5V_{DC}, and +3.3V_{DC}, which are required by the PC unit 110, to supply the voltages to the PC unit 110.

Referring again to Fig. 1, the user interface unit 140 is a component which receives a user input for the PC unit 110 and the TV unit 120.

In the PC-integrated TV according to the present invention, the PC unit 110 and the TV unit 120 can be integrally operated through one user interface. For the user interface 140, various interface devices may be applied. Considering that the PC-integrated TV is mainly used for home entertainment, it is preferable that a remote-control type user interface is applied.

For example, when the PC-integrated TV is utilized in a living room as a main device for home entertainment, it is preferable that integrated manipulation for the PC-integrated TV can be performed through a remote control in the same way as user manipulation for a conventional TV set is performed through a remote control.

Therefore, the user interface unit 140 may include a remote-control signal receiving and processing section 141 and a remote control 142.

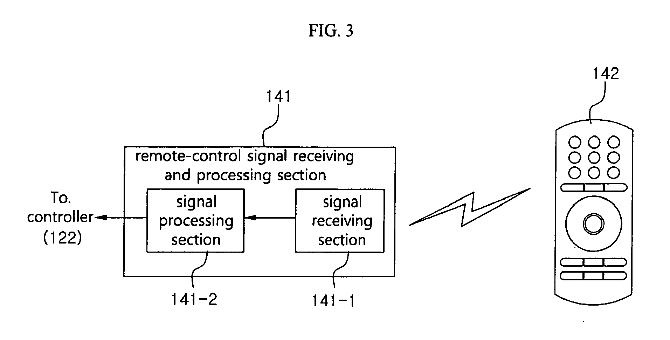

Fig. 3 is a block diagram of the user interface unit of the PC-integrated TV according to the present invention.

Referring to Fig. 3, the remote-control signal receiving and processing section 141 may include a signal receiving element 141-1 which receives Radio Frequency (RF) signals or infra-red signals delivered from the remote control 142 and a signal processing element 141-2 which converts the RF signals or infra-red signals received from the signal receiving element 141-1 into electrical signals to deliver the converted signals to the controller 122 included in the TV unit 120.

The remote control 142 is a device for receiving user manipulation required by the PC unit 110 and the TV unit 120 of the PC-integrated TV 100.

Meanwhile, user manipulations which can be received through the remote control 142 include typical manipulations such as channel change, volume control, and screen mode change, which are required in a conventional TV set and controls for the PC unit. The controls for the PC unit may include a key input for manipulating a user interface screen, which can be executed in the PC unit, an execution key input for selecting various applications which can be executed in the PC unit, and control operations allocated to specific applications. For example, when a specific application is a DVD player or a music/motion picture player, manipulations such as play, pause, Fast Forward (FF), and Rewind (REW) may be included in the controls for the PC unit.

Referring again to Fig. 1, the PC unit 110 and the TV unit 120 may be connected to each other through the PC-TV interface unit 150.

The PC-TV interface unit 150 may be configured in various manners depending on the type of a system.

For the PC-TV interface unit 150 of the PC-integrated TV 100, a 40-pin universal connector may be applied. The PC-TV interface unit 150 integrates image signals, audio signals, and control signals of the PC unit 110 to transmit the integrated signals to the TV unit 120, and transmits control signals generated by the TV unit 120 to the PC unit 110.

That is, the PC-TV interface unit 150 transmits image signals output from the video controller and audio signals output from the audio controller to the TV unit 120, and transmits control signals generated by the controller 122 of the TV unit to the PC unit 110. As described in Fig. 2, the control signals generated from the controller 122 of the TV unit 120 may be control signals which are obtained by converting user manipulations input through the remote control 142 and the remote-control signal receiving and processing section 141, which are included in the user interface unit 140, and correspond to the PC unit 110.

According to the PC-integrated TV of the present invention, a PC unit and a TV unit are organically combined in such a manner the duplication of components is minimized. Therefore, power can be supplied to the PC unit and the TV unit through one SMPS power module, and the PC unit and the TV unit can be integrally manipulated through one user interface.

When the PC-integrated TV is used, the cable connection between the PC and the TV can be minimized, and the manipulation between the PC unit and the TV unit can be organically performed.

While the present invention has been shown and described with reference to certain example embodiments thereof, it will be understood by those skilled in the art that various changes in form and details may be made therein without departing from the spirit and scope of the present invention as defined by the appended claims.

## Claims

1. A PC-integrated TV comprising:
a PC unit that includes a PC main board having a CPU, a main memory device, and a system chipset provided thereon and an auxiliary memory device having an operating system mounted therein;
a TV unit that includes a TV signal processing section configured to process TV signals and a controller configured to process internal and external controls;
a Switching Mode Power Supply (SMPS) unit that supplies power to the TV unit and PC unit;
a PC-TV interface unit that serves as an interface between the TV unit and the PC unit; and
a user interface unit that delivers a user manipulation to the controller of the TV unit,
wherein the SMPS unit includes:
an SMPS power module that receives an AC voltage and outputs a voltage suitable for the TV unit; and
an Advanced Technology Extension (ATX) power board that receives the voltage output from the SMPS power module, converts the voltage into a voltage suitable for the PC unit to supply the converted voltage to the PC unit, and can perform control by the ATX power supply standard.

2. The PC-integrated TV of claim 1, wherein the SMPS power module is configured to supply voltages of +24V_{DC}, +12V_{DC}, and +5V_{DC}.

3. The PC-integrated TV of claim 1, wherein the ATX power board is configured to supply voltages of +12V_{DC}, -12V_{DC}, +5V_{DC}, and +3.3V_{DC}.

4. The PC-integrated TV of claim 1, wherein the user interface unit includes:
a remote-control signal receiving and processing section having a signal receiving element and a signal processing element; and
a remote control.

5. The PC-integrated TV of claim 4, wherein the signal receiving element receives infra-red remote-control signals delivered from the remote control.

6. The PC-integrated TV of claim 4, wherein the signal receiving element receives Radio Frequency (RF) remote-control signals delivered from the remote control.

7. The PC-integrated TV of claim 4, wherein the remote control is configured to receive user inputs which instruct the operation of the PC unit and user inputs which instruct the operation of the TV unit.

8. The PC-integrated TV of claim 7, wherein the user inputs which instruct the operation of the TV unit include user inputs which instruct channel change, screen mode change, and volume control.

9. The PC-integrated TV of claim 7, wherein the user inputs which instruct the operation of the PC unit include a key input for manipulating a user interface screen which can be executed in the PC unit, an application selection for selecting various applications which can be executed in the PC unit, and a user input which instructs control operations allocated in specific applications.
